(19) Europäisches Patentamt
European Patent Office
Office européen des brevets

(11) Veröffentlichungsnummer: **0 349 873 B1**

(12) # EUROPÄISCHE PATENTSCHRIFT

(45) Veröffentlichungstag der Patentschrift: **02.06.93**

(51) Int. Cl.$^5$: **C09D 5/44**, C08G 18/80, C08G 18/64

(21) Anmeldenummer: **89111571.9**

(22) Anmeldetag: **24.06.89**

(54) **Verfahren zur Herstellung von Vernetzungskomponenten für Lackbindemittel.**

(30) Priorität: **04.07.88 AT 1721/88**

(43) Veröffentlichungstag der Anmeldung:
**10.01.90 Patentblatt 90/02**

(45) Bekanntmachung des Hinweises auf die Patenterteilung:
**02.06.93 Patentblatt 93/22**

(84) Benannte Vertragsstaaten:
**BE DE ES FR GB IT NL SE**

(56) Entgegenhaltungen:
**WO-A-86/01526**
**AT-B- 381 500**

(73) Patentinhaber: **VIANOVA KUNSTHARZ AKTIENGESELLSCHAFT**
**Postfach 191 Leechgasse 21**
**A-8011 Graz(AT)**

(72) Erfinder: **Schmölzer, Gerhard, Dr.**
**Eisteichgasse 37**
**A-8010 Graz(AT)**
Erfinder: **Schipfer, Rudolf, Dr.**
**Ernst Haeckelstrasse 53**
**A-8010 Graz(AT)**

**EP 0 349 873 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Vernetzungskomponenten für wasserverdünnbare Lackbindemittel, insbesonders für kathodisch abscheidbare Lacke.

Aufgabe der vorliegenden Erfindung war die Formulierung kathodisch abscheidbarer Lacke, die bei Einbrenntemperaturen von 140 °C unter industriellen Bedingungen vernetzt werden können, wobei die Filme sowohl bezüglich ihrer Schutzeigenschaften gegenüber chemischen oder mechanischen Einflüssen, als auch bezüglich ihrer Oberflächenausbildung den Wünschen der Verbraucher, insbesonders der Automobilindustrie, entsprechen müssen.

Die Erfüllung dieser Anforderungen ist mit den Produkten, wie sie dem Stand der Technik entsprechen, nur teilweise möglich.

In einer Reihe von Patentschriften, wie den Europäischen Patentschriften 00 00 086, 00 40 867 und 00 79 629 oder den Österreichischen Patentschriften 372 099, 379 602 oder 385 039 werden Bindemittelsysteme beschrieben, die durch Umesterung mit aktiven Estergruppierungen vernetzt werden. Die Systeme der genannten AT-Patentschriften zeigen bei entsprechender Formulierung hohe Einbrennreaktivität und ergeben, bei 130 bis 140 °C eingebrannt, Lackfilme mit hoher Vernetzungsdichte bei glatter Oberfläche und ausgezeichnetem Korrosionsschutz auf zinkphosphatierten Stahlblechen. Allerdings werden bei der zur Erzielung dieser Korrosionsschutzwirkung notwendigen Vernetzungsdichte die mechanischen Eigenschaften und die Haftung auf dem Substrat, besonders bei fehlender oder unzureichender Vorbehandlung, negativ beeinflußt.

In zahlreichen Literaturstellen wird die Vernetzung kathodisch abgeschiedener Lackfilme durch Umurethanisierung über blockierte Isocyanatgruppen beschrieben. Durch die Wahl der geeigneten Blockierungsmittel kannebenfalls der gewünschte Temperaturbereich für die Vernetzung erreicht werden. Solche Vorschläge sind beispielsweise in der EP 02 06 071 und in der EP 01 18 743 zu finden.

Da die Entblockung der Isocyanatgruppen und damit die Vernetzung bei einer konkreten Temperatur schlagartig erfolgt und dadurch ein Verfließen des Filmes nur beschränkt möglich ist, zeigen "low-bake"-Kombinationen auf dieser Basis eine meist unzulängliche Filmoberfläche. Überdies führt ein höherer Anteil von Urethanstrukturen zu einer Verschlechterung des Löslichkeitsverhaltens dieser Systeme.

Der Einsatz von Mischungen verschiedener Vernetzungssysteme, wie dies in der DE 34 32 233 A vorgeschlagen wird, ist in den meisten Fällen nicht zielführend, da durch die Unverträglichkeit der Komponenten Separationen in der Bindemittelkombination bzw. den daraus hergestellten Lacken auftreten. Durch eine partielle Kondensation der Umesterungskomponente mit dem Basisbindemittel kann zwar dieser Nachteil überwunden werden, doch wird durch diese Maßnahme die Beschichtungsspannung herabgesetzt und die Hydrolyseempfindlichkeit der übrigen Estergruppen verstärkt.

Es wurde nun gefunden, daß die gestellte Aufgabe durch Vernetzungskomponenten erfüllt werden kann, die beide Vernetzungsmechanismen in sich vereinigen.

Die Erfindung betrifft demgemäß ein Verfahren zur Herstellung von Vernetzungskomponenten für Hydroxylgruppen und/oder sekundäre und/oder primäre Aminogruppen aufweisende Lackbindemittel, insbesonders für kathodisch abscheidbare Lacke, die durch Umesterung und/oder Umamidierung und/oder Umurethanisierung vernetzbar sind, welches dadurch gekennzeichnet ist, daß man mindestens 0,25 Mol, vorzugsweise 0,5 Mol, Hydroxylgruppen einer Polyhydroxylverbindung und/oder eines Alkanolamins mit mindestens 2 Hydroxylgruppen mit einem Ester der Formel

$R_1O - CO - R_2 - CO - OR_1$,

wobei

- $R_1$ gleiche oder verschiedene Alkylreste mit 1 bis 8 C-Atomen und
- $R_2$ eine der Gruppen $-CH_2-$, $-CH=CH-$ $-CH(OH)-CH_2-$, $-C(OH)=CH-$, $-CH(OH)-CH(OH)-$ oder

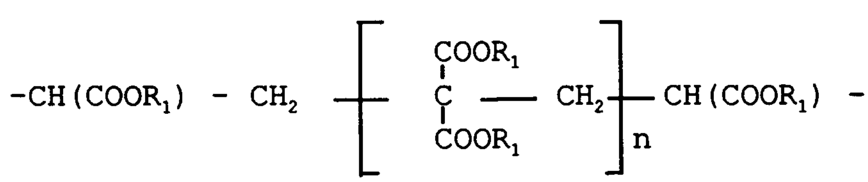

darstellt und

n gleich 0 bis 2 ist,

partiell bis zur Abspaltung von jeweils 1 Mol des Veresterungsalkohols pro Mol des Esters umestert und in einer zweiten Reaktionsstufe mindestens eine weitere Hydroxylgruppe der Polyhydroxylverbindung mit einer Di- oder Polyisocyanatverbindung, deren NCO-Gruppen bis auf maximal 2, vorzugsweise bis auf eine, mit einem Verkappungsmittel blockiert sind, umsetzt.

Überraschenderweise ergeben die erfindungsgemäß hergestellten Vernetzungskomponenten ein wesentlich günstigeres Eigenschaftsbild als äquivalent zusammengesetzte Mischungen der umesterungsfähigen Verbindungen und blockierten Isocyanatverbindungen.

Für den Aufbau der Vernetzungskomponenten geeignete Polyhydroxylverbindungen sind geradkettige oder verzweigte Alkylenglykole, Trimethylolalkane sowie oligomere Polyester mit 2 bis 5 Hydroxylgruppen. Vorzugsweise werden Triole herangezogen. Diole werden vorzugsweise beim Einsatz von höherfunktionellen Umesterungs- und/oder Isocyanatverbindungen verwendet.

Die Polyole werden in erster Stufe partiell mit einem Ester der Formel

$R_1O - CO - R_2 - CO - OR_1$

umgesetzt, wobei die Reste $R_1$ und $R_2$ die in den Ansprüchen angegebene Bedeutung haben. Die bevorzugten Ester sind die Methyl- und Ethylester der Malonsäure sowie aus diesen Estern erhaltene höherfunktionelle Verbindungen, wie sie in der AT-PS 379 602 beschrieben werden.

Der Fortschritt der Reaktion wird durch Bestimmung der Menge des abgespaltenen Alkohols verfolgt. Die Reaktion wird beendet, wenn pro Mol eingesetzter Esterkomponente 1 Mol des Veresterungsalkohols abgespalten ist. Pro Mol Polyol werden mindestens 0,25 Mol, vorzugsweise 0,5 bis 2 Mol, der Esterkomponenten eingesetzt.

In der zweiten Reaktionsstufe wird mindestens eine weitere Hydroxylgruppe des Polyols mit einer Di- oder Polyisocyanatverbindung umgesetzt, deren NCO-Gruppen bis auf maximal 2, vorzugsweise auf eine verbleibende freie NCO-Gruppe mit einem Verkappungsmittel blockiert sind.

Als Diisocyanat wird vorzugsweise das handelsübliche Toluylendiisocyanat und das Isophorondiisocyanat, sowie das Hexamethylendiisocyanat bzw. dessen handelsüblichen Dimeren und Trimeren eingesetzt.

Als Verkappungsmittel dienen vorzugsweise Monohydroxylverbindungen, wie Alkohole und Glykolmonoether, beispielsweise n-Butanol, 2-Ethylhexanol, Monoethylenglykolether, Mono- bzw. Diethylenglykolbutylether, Mono-ethylenglykolhexylether oder Methoxypropanol. Weiters können auch die üblichen Verkappungsmittel, wie Phenole, Ketoxime etc. eingesetzt werden. Vorzugsweise werden Verkappungsmittel verwendet, deren Entblockungstemperatur bei maximal 160 °C liegt.

Die Reaktion wird bis zu einem NCO-Wert von 0 geführt. Zur Erzielung einer ausreichenden Funktionalität der Vernetzungskomponente werden vorzugsweise alle Hydroxylgruppen des Polyols umgesetzt. Das Verhältnis der umesterungsfähigen Komponente zur Isocyanatkomponente beträgt beim Einsatz von Triolen vorzugsweise 0,5 - 1,0 Mol : 2,5 - 2 Mol pro Mol des Triols.

Die Produkte werden vorteilhaft als Lösung in wasserverträglichen Lösemitteln, vorzugsweise in Glykolethern, eingesetzt. Die Lösemittel werden gegebenenfalls bereits ganz oder anteilig in den einzelnen Reaktionsstufen eingesetzt. Selbstverständlich dürfen in diesem Falle nur reaktionsinerte Lösemittel verwendet werden.

Kationische Bindemittel, die als Kombinationspartner für die Vernetzungskomponenten eingesetzt werden, sind in großer Zahl aus der Literatur bekannt. Beispielsweise seien hier die sogenannten Epoxidharz-Aminaddukte der verschiedenen Glycidylgruppen tragenden Verbindungen auf Basis von Phenolen, Diolen u. ä. bzw. von Copolymeren genannt. Andere Produkte basieren auf Copolymeren, die Aminoacrylate als Comonomere enthalten oder auf Mannich-Reaktionsprodukten von Phenolen, die in mannigfaltiger Weise modifiziert werden könnnen.

Die Verarbeitung der erfindungsgemäß hergestellten Vernetzungskomponenten erfolgt durch Mischung der Kombinationspartner, die vorzugsweise bei Temperaturen bis 60 °C erfolgt. Gegebenenfalls kann auch eine anteilige Kondensation der Partner bei Temperaturen bis 120 °C erfolgen.

Die Protonisierung der kationischen Bindemittel erfolgt vorteilhaft nach der Mischung mit der Vernetzungskomponente. Die weitere Verarbeitung der Bindemittel, sowie die Auswahl der entsprechenden Pigmente, Füllstoffe, Additive, und gegebenenfalls Zumischungen von anderen Harztypen sind dem Fachmann bekannt oder der einschlägigen Literatur zu entnehmen. Das gleiche gilt auch für die Verarbeitung der Lacke auf konventionelle Weise oder nach dem Elektrotauchlackierverfahren und für die Prüfung der vernetzten Filme.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

In den Beispielen werden folgende Abkürzungen benützt:

| | |
|---|---|
| DGDME | Diethylenglykoldimethylether |
| EGL | Ethylenglykolmonoethylether |
| BUGL | Ethylengylkolmonobutylether |
| HGL | Ethylenglykolmonohexylether |
| MP | Methoxypropanol |
| TDI | Toluylendiisocyanat (handelsübliches Isomerengemisch) |
| HMDI | Hexamethylendiisocyanat |
| D-HMDI | Dimeres HMDI (Tolonat HDB) |
| T-HMDI | Trimeres HMDI (Tolonat HDT) |
| IPDI | Isophorondiisocyanat |
| EHEX | 2-Ethylhexanol |
| DEAPA | N,N-Diethylaminopropylamin |

Herstellung der Komponenten

Vernetzungskomponente B 1

134 g (1 Mol) Trimethylolpropan werden mit 160 g (1 Mol) Malonsäurediethylester versetzt und bis zum Destillationsbeginn (ca. 140 - 150 °C) erhitzt. Bei steigender Temperatur (bis 180 °C) werden 46 g (1 Mol) Ethanol abdestilliert. Nach beendeter Reaktion wird mit 128 g DGDME verdünnt und auf 60 °C gekühlt. Anschließend werden 264 g (1 Mol bzw. 1 NCO-Äquivalent) eines Reaktionsproduktes aus 1 Mol TDI und 1 Mol EGL innerhalb von 4 Stunden zugegeben und bei 60 °C auf einen NCO-Gehalt unter 0,02 Milliäquivalente pro g Probe reagiert.

Das erhaltene Produkt hat einen Festharzgehalt von 80 ± 2 % (30 Minuten, 120 °C) und eine Viskosität nach GARDNER-HOLDT von K (10 g Produkt + 2 g DGDME). Der Brechungsindex der Vernetzungskomponente beträgt bei 20 °C $n_D$ = 1,4960 ± 0,001.

Vernetzungskomponente B 2

Zu einer Mischung aus 134,4 g (0,84 Mol) Malonsäurediethylester, 0,286 g (0,0034 Mol) Piperidin und 0,185 g (0,0034 Mol) Ameisensäure 85 % werden bei 80 °C 13,86 g (0,42 Mol) Paraformaldehyd 91 % portionsweise zugegeben, sodaß bei Einsetzen der exothermen Reaktion eine Temperatur von 95 °C nicht überschritten wird. Das Reaktionsgemisch wird bei 95 °C gerührt bis der Paraformaldehyd vollständig gelöst ist. Die Temperatur wird unter einsetzender Wasserabspaltung innerhalb von 2 Stunden auf 110 °C erhöht. Nach Erreichen von 110 °C werden mit Spezialbenzin (Siedebereich 80 - 120 °C) als Schleppmittel insgesamt 9,24 g (0,51 Mol) Wasser abdestilliert. Unter Anlegen von Vakuum wird anschließend das eingesetzte Schleppmittel abdestilliert. Das Produkt weist einen Festkörpergehalt von 78 ± 2 % (30 Minuten, 120 °C) auf. Der Brechungsindex ergibt einen Wert von $n_D$/20 = 1,437 ± 0,002.

Anschließend werden 134 g (1 Mol) Trimethylolpropan zugegeben und bis zum Destillationsbeginn (140 - 150 °C) erhitzt. Bei steigender Temperatur werden 23 g (0,5 Mol) Ethanol abdestilliert. Nach Erreichen der Destillatmenge wird mit 263 g DGDME verdünnt und auf 30 °C gekühlt. Bei 30 °C werden innerhalb von 6 Stunden 800 g (2,5 Mol bzw. 2,5 NCO-Äquivalente) eines Reaktionsproduktes aus 2,5 Mol TDI und 2,5 Mol HGL zugegeben. In weiteren 4 Stunden wird die Temperatur auf 100 °C erhöht und bei dieser Temperatur bis zu einem NCO-Gehalt unter 0,01 Milliäquivalente pro g Probe reagiert.

Das erhaltene Produkt mit einem Festharzgehalt von 80 ± 2 % (30 Minuten, 120 °C) weist einen Brechungsindex $n_D$/20 von 1,507 ± 0,001 und eine Viskosität (10 g Harzlösung + 4 g DGDME) von E - F (Gardner Holdt) auf.

Vernetzungskomponente B 3

Ein in gleicher Weise wie in B 2 hergestelltes Zwischenprodukt aus Malonsäurediethylester und Paraformaldehyd wird mit 149 g (1 Mol) TROLA versetzt und bis zur einsetzenden Ethanolabspaltung (ca. 110 °C) erhitzt. Insgesamt werden 23 g (0,5 Mol) Ethanol abdestilliert und anschließend mit 440 g DGDME

verdünnt und auf 20 °C gekühlt. Bei 20 °C werden unter Kühlen 760 g (2,5 Mol bzw. 2,5 NCO-Äquivalente) eines Reaktionsproduktes aus 2,5 Mol TDI und 2,5 Mol EHEX in 6 Stunden zugegeben und bei dieser Temperatur bis zu einem NCO-Gehalt unter 0,01 Milliäquivalent pro g Harzlösung reagiert.

Das erhaltene Produkt weist folgende Kennzahlen auf:

| | |
|---|---|
| Festharzgehalt (120 °C, 30 Minuten) | 70 ± 2 % |
| Viskosität (10 g Harzlösung + 2 g DGDME) | D-E (Gardner-Holdt) |
| Aminzahl (bezogen auf Festharzgehalt) | 54 mg KOH/g Festharz |
| Brechnungsindex $n_D/20$ | 1,492 ± 0,001 |

Vernetzungskomponente B 4

Zu einer Mischung aus 160 g (1 Mol) Malonsäurediethylester, 0,34 g (0,004 Mol) Piperidin und 0,22 g (0,004 Mol) Ameisensäure 85 % werden bei 80 °C 16,5 g (0,5 Mol) Paraformaldehyd 91 % portionsweise zugegeben, sodaß bei Einsetzen der exothermen Reaktion eine Temperatur von 95 °C nicht überschritten wird. Das Reaktionsgemisch wird bei 95 °C gerührt bis der Paraformaldehyd vollständig gelöst ist. Die Temperatur wird unter einsetzender Wasserabspaltung innerhalb von 2 Stunden auf 110 °C erhöht. Nach Erreichen von 110 °C werden mit Spezialbenzin (Siedebereich 80 - 120 °C) als Schleppmittel insgesamt 11 g (0,61 Mol) Wasser abdestilliert. Unter Anlegen von Vakuum wird anschließend das eingesetzte Schleppmittel abdestilliert. Das Produkt weist einen Festkörpergehalt von 78 ± 2 % (30 Minuten, 120 °C) auf. Der Brechungsindex ergibt einen Wert von $n_D/20$ = 1,437 ± 0,002. Nach der Zugabe von 90 g (1 Mol) 1,4-Butandiol wird die Temperatur bis zum Destillationsbeginn von Ethanol erhöht und 46 g (1 Mol) Ethanol abdestilliert, mit 117 g DGDME verdünnt und auf 40 °C gekühlt. Innerhalb von 4 Stunden werden 258 g (1 Mol bzw. 1,0 NCO-Äquivalente) eines Reaktionsproduktes aus 1 Mol HMDI und 1 Mol n-Butanol zugegeben und 6 Stunden bei 40 °C bis zu einem NCO-Gehalt unter 0,01 Milliäquivalente pro g Probe reagiert. Das erhaltene Produkt weist folgende Kennzahlen auf:

| | |
|---|---|
| Festharzgehalt (120 °C, 30 Minuten) | 80 ± 2 % |
| Viskosität (10 g Harzlösung + 2 g DGDME) | H - I (Gardner Holdt) |
| Brechungsindex $n_D/20$ | 1,487 ± 0,002 |

Vernetzungskomponente B 5

118 g (1 Mol) Hexandiol-1,6 und 160 g (1 Mol) Malonsäurediethylester werden bis zur beginnenden Destillation von Ethanol erhitzt und 46 g (1 Mol) Ethanol abdestilliert. Danach wird mit 259 g DGDME verdünnt und auf 50 °C gekühlt. Bei 50 °C werden anschließend 372 g (1 Mol bzw. 1 NCO-Äquivalent) eines Reaktionsproduktes aus 1 Mol IPDI und 1 Mol tertiär-Butylphenol zugegeben und auf einen NCO-Gehalt unter 0,01 Milliäquivalent pro g Probe reagiert.

Das Endprodukt weist folgende Kennzahlen auf:

| | |
|---|---|
| Festharzgehalt (30 Minuten, 120 °C) | 70 ± 2 % |
| Viskosität (10 g Harzlösung + 2 g DGDME) | H - J |
| Brechungsindex $n_D/20$ | 1,491 ± 0,002 |

Vernetzungskomponente B 6

149 g (1 Mol) Triethanolamin werden mit 432 g (2 Mol) Malonsäuredibutylester bis zur Destillation von Butanol erhitzt und 148 g (2 Mol) Butanol über eine Kolonne abdestilliert. Anschließend wird mit 385 g DGDME verdünnt und auf 50 °C gekühlt. Bei dieser Temperatur werden innerhalb von 4 Stunden 660 g (1 NCO-Äquivalent) eines auf 80 % mit DGDME angelösten Reaktionsproduktes aus 1 Mol D-HMDI und 1 Mol HGL zugegeben und bis auf einen NCO-Gehalt unter 0,01 Milliäquivalente pro g Probe reagiert.

Das erhaltene Produkt weist folgende Kennzahlen auf:

| | |
|---|---|
| Festharzgehalt ( 30 Minuten, 120 °C)<br>Viskosität (10 g Harzlösung + 2 g DGDME)<br>Brechungsindex $n_D/20$ | 65 ± 2 %<br>D - E (Gardner-Holdt)<br>1,4807 ± 0,002 |

Vernetzungskomponente B 7

134 g (1 Mol) Trimethylolpropan und 264 g (2 Mol) Malonsäuredimethylester werden bis zur einsetzenden Destillation erhitzt und über eine Kolonne werden 64 g (2 Mol) Methanol abdestilliert. Anschließend wird mit 397 g DGDME verdünnt und auf 60 °C gekühlt. Innerhalb von 4 Stunden erfolgt die Zugabe von 941 g (1 NCO-Äquivalent) eines auf 80 % mit DGDME angelösten Reaktionsproduktes aus 1 Mol T-HMDI und 2 Mol MP. Die Reaktionstemperatur wird auf 100 °C erhöht und bis zu einem NCO-Gehalt unter 0,01 Milliäquivalente gehalten.

Das Produkt weist folgende Kennzahlen auf:

| | |
|---|---|
| Festharzgehalt (120 °C, 30 Minuten)<br>Viskosität (10 g Harzlösung + 2 g DGDME)<br>Brechungsindex $n_D/20$ | 65 ± 2 %<br>K - L (Gardner-Holdt)<br>1,477 ± 0,002 |

Für die Vergleichsversuche wurden die Vernetzungskomponenten B 8 und B 9 in folgender Weise hergestellt:

Vernetzungskomponente B 8 (Komponente B 2 aus AT 372 099)

Es wird ein Umesterungsprodukt aus 396 g Malonsäuredimethylester und 134 g Trimethylolpropan mit 1,1 g Zinkoctoat (8 % Metallgehalt) hergestellt. Das Substanzgemisch wird bei 130 °C zirka 10 Stunden lang umgesetzt, wobei etwa 90 g Methanol als Destillat entweichen. Der fertige polyfunktionelle Ester ist eine farblose Flüssigkeit mit einer Hydroxylzahl von 16 mg KOH/g.

Vernetzungskomponente B 9 (Polyurethanvernetzer)

134 g (1 Mol) Trimethylolpropan werden in 397 g DGDME gelöst. In diese Lösung werden 792 g (3 Mol, bzw. 3 NCO-Äquivalente) eines Reaktionsproduktes aus 3 Mol TDI mit 3 Mol EGL innerhalb von 3 Stunden zugegeben und die Temperatur der exothermen Reaktion durch Kühlen auf 40 °C gehalten. Die Reaktion ist beendet, wenn der NCO-Gehalt unter 0,02 Milliäquivalente pro g Probe gesunken ist.

Das erhaltene Produkt weist einen Festharzgehalt von 70 ± 2 % (30 Minuten, 120 °C) auf und eine Viskosität nach Gardner-Holdt von O - P (10 g Produkt + 3 g DGDME). Der Brechungsindex des Polyurethanvernetzers beträgt bei 20 °C $n_D/20$ = 1,4860 ± 0,0015.

Zur Kombination mit den Vernetzungskomponenten wurden folgende Basisharze eingesetzt:

Basisharz A 1:

190 g eines Bisphenol-A-Epoxidharzes (1 Epoxidäquivalent) und 1425 g eines Bisphenol-A-Epoxidharzes (3 Epoxidäquivalente) werden bei 100 °C in 597 g EGL gelöst. Die Lösung wird auf 60 °C gekühlt und mit 126 g Diethanolamin versetzt. Man steigert die Temperatur während 2 Stunden langsam auf 80 °C. Anschließend werden 169 g DEAPA zugegeben und die Temperatur in 2 Stunden auf 120 °C gesteigert. Bei dieser Temperatur werden 478 g Cardura E 10 (SHELL) zugegeben und anschließend 5 Stunden bei 130 °C unter Rühren belassen. Man verdünnt mit EGL auf 65 % Harzgehalt. Das Festharz hat eine Aminzahl von 91 mg KOH/g und eine Hydroxylzahl von 265 mg KOH/g.

Basisharz A 2:

2 g Azobisisobutyronitril werden in 40 g Isopropanol unter Erwärmen gelöst. Zur klaren Lösung wird bei Rückflußtemperatur (ca. 84 °C) ein Monomerengemisch, bestehend aus 20 g Glycidylmethacrylat, 20 g Hydroxyethylmethacrylat, 20 g Methylmethacrylat und 40 g 2-Ethylhexylacrylat, in dem 2 g Azobisisobutyronitril klar gelöst sind, während 2 Stunden gleichmäßig zugegeben. Die Reaktionsmasse wird weitere 3

Stunden bei Rückflußtemperatur gerührt. Eine homogene Lösung von 16 g Diisopropanolamin in 20 g BUGL wird der Reaktionsmasse bei 85 °C rasch zugegeben, anschließend wird 2 Stunden bei 90 °C nachgerührt. Das Produkt wird bei 90 °C mit 13 g EGL und bei 40 °C mit 10 g Aceton verdünnt.

Das Harz hat einen Festharzgehalt von 57 %, eine Aminzahl von 58 mg KOH/g und eine Hydroxylzahl von 250 mg KOH/g.

Basisharz A 3:

380 g eines Epoxidnovolakharzes (Epoxidäquivalent ca. 190) werden in 354 g DGDME gelöst und bei 80 °C mit 269 g eines Halbesters aus Tetrahydrophthalsäureanhydrid und Hydroxyethyloxazolidin, sowie mit 37 g Diethylamin und 140 g Tallölfettsäure bis zu einer Säurezahl von unter 3 mg KOH/g umgesetzt. Anschließend wird das Harz nach Zusatz von 10 Millimol Essigsäure (3 normal) pro 100 g Festharz 3 Stunden bei 65 °C gerührt. Das Produkt hat eine OH-Zahl entsprechend 270 mg KOH/g.

Basisharz A 4:

1627 g (3,43 Val) eines Epoxidharzes auf Basis Bisphenol A (Epoxidäquivalentgewicht ca. 475) werden mit 226 g (0,24 COOH-Val) eines Polyesters aus 3 Mol Trimethylolpropan, 2 Mol Adipinsäure, 1 Mol Isononansäure und 1 Mol Tetrahydrophthalsäureanhydrid (Säurezahl 65 mg KOH/g, Carboxyläquivalent 942 g) in 85%iger Lösung in MP bei 110 °C bis zu einer Säurezahl von weniger als 5 mg KOH/g umgesetzt.

Nach Verdünnen des Ansatzes mit MP auf einen Festkörpergehalt von 70 % erfolgt bei 60 °C innerhalb von 2 Stunden die Zugabe einer Mischung von 94,5 g (0,9 Val) Diethanolamin, 67,5 g (0,9 Val) Methylethanolamin, 78 g (1,2 Val) DEAPA und 240 g MP. Anschließend wird die Temperatur auf 90 °C gesteigert und diese Temperatur für eine Stunde gehalten. Dann wird der Festkörpergehalt mit MP auf 70 % eingestellt.

Basisharz A 5:

570 g (3 Val) eines Epoxidharzes auf Basis Bisphenol A (Epoxidäquivalent ca. 190) und 317 g MP werden auf 60 °C erwärmt und innerhalb von 2 Stunden mit einer Mischung aus 116 g (0,9 Val) Ethylhexylamin und 163 g (0,15 NH-Val) eines polymeren Amins (siehe unten) versetzt und bis zu einem MEQ-Wert von 2,06 reagiert. Anschließend werden 1330 g (2,1 Val) einer 75%igen Lösung eines Bisphenol A-Epoxidharzes (Epoxidäquivalent 475) in MP zugegeben. Bei 60 °C wird weiters innerhalb einer Stunde eine Lösung von 189 g (1,8 Val) Diethanolamin in 176 g MP zugegeben und die Reaktion bis zu einem MEQ-Wert von 1,57 geführt. Nach weiterer Zugabe einer Lösung von 78 g (1,2 Val) DEAPA in 54 g MP innerhalb einer Stunde wird bei 60 °C bis zu einem MEQ-Wert von 1,46 reagiert. Die Temperatur wird auf 90 °C und anschließend innerhalb einer weiteren Stunde auf 120 °C gesteigert. Bei Erreichen einer Viskosität (GARDNER-HOLDT; 6 g Harz + 4 g MP) von I - J wird mit MP auf einen Festkörpergehalt von 65 % verdünnt. Das Produkt hat eine Aminzahl von 117 mg KOH/g und eine Hydroxylzahl von 323 mg KOH/g.

Das polymere Amin wird durch Umsetzung von 1 Mol Diethylentriamin mit 3,1 Mol 2-Ethylhexylglycidylether und 0,5 Mol eines Bisphenol A-Epoxidharzes (Epoxidäquivalent ca. 190) in 80%iger MP-Lösung hergestellt. Das Produkt weist eine Viskosität (DIN 53211/20 °C; 100 g Harz + 30 g MP) von 60 bis 80 Sekunden auf.

EPA-Wert

(Bestimmung der Summe der Oxiran- und Amingruppen in Milliäquivalenten)

0,2 - 0,4 g Harz werden genau (auf Milligramm) gewogen und in 5 Tropfen Methoxypropanol geschmolzen. Nach Abkühlen werden 25 ml einer Mischung aus Dichlormethan und Eisessig (4:1 Volumsteile) zugegeben und das Harz unter leichtem Erwärmen gelöst. Dann werden bei Zimmertemperatur 0,5 g Tetrabutylammoniumjodid und 3 Tropfen Kristallviolett-Lösung zugegeben. Man titriert mit 0,1 n Perchlorsäure-Lösung in Eisessig von blau-violett nach gras-grün (kein Blauton).

Ein Blindwert (ohne Harz) wird in gleicher Weise bestimmt.

$$\text{EPA-Wert} = \frac{(A - B) \times 0{,}1 \times F}{\text{Einwaage (g)}}$$

A = ml 0,1 n Perchlorsäure für Probe
B = ml 0,1 n Perchlorsäure für Blindwert
F = Faktor der 0,1 n Perchlorsäure-Lösung

Bestimmung des Faktors (F) mit Kaliumhydrogenphthalat.

In einer ERLENMEYER-Flasche werden ca. 200 mg Kaliumhydrogenphthalat (pro analysi) auf 0,1 mg genau eingewogen. Nach Zugabe von 30 ml Eisessig und 3 Tropfen Kristallviolett-Lösung wird mit der ca. 0,1 n Perchlorsäure-Lösung von blau-violett nach grasgrün titriert.

$$F = \frac{W}{C \times 20{,}422}$$

W = Einwaage Kaliumhydrogenphthalat
C = ml der ca. 0,1 n Perchlorsäure-Lösung in Eisessig.

Basisharz A 6:

Ein modifiziertes Epoxid-Amin-Addukt, wie es als Basisharz A 4 beschrieben wurde, wird in der letzten Phase bei 90 °C mit 5 Gew.-% Polypropylenglykoldiglycidylether versetzt und bei 120 °C bis zur Umsetzung aller Glycidylgruppen reagiert. Das Produkt weist eine Aminzahl von 76 mg KOH/g und eine Hydroxylzahl (prim. OH) von 89 mg KOH/g auf.

Beispiele 1 bis 7 und Vergleichsbeispiele V1 bis V3:

Die erfindungsgemäß hergestellten Vernetzungskomponenten wurden mit verschiedenen Basisharzen unter den in der Tabelle 1 angegebenen Bedingungen kombiniert.

Dazu werden die Komponenten in 70%iger Lösung in MP unter den in der Tabelle 1 angegebenen Bedingungen gemischt bzw. partiell reagiert.

Tabelle 1

| Beispiel | Teile Festharz Basisharz (A) | | Teile Festharz Vernetzungskomponente (B) | | Stunden/°C |
|---|---|---|---|---|---|
| 1 | 70 | A 1 | 30 | B 1 | 2 / 120 |
| 2 | 80 | A 2 | 20 | B 6 | 0,5/ 60 |
| 3 | 75 | A 3 | 25 | B 5 | 2 / 100 |
| 4 | 75 | A 4 | 25 | B 7 | 1 / 90 |
| 5 | 70 | A 5 | 30 | B 2 | 2 / 120 |
| 6 | 80 | A 6 | 20 | B 4 | 0,5/ 60 |
| 7 | 75 | A 5 | 25 | B 3 | 1 / 90 |
| V1 1) | 70 | A 1 | 30 | B 8 | 2 / 100 |
| V2 | 80 | A 4 | 20 | B 9 | 0,5/ 60 |
| V3 2) | 70 | A 4 | 15<br>15 | B 8<br>B 9 | 0,5/ 60 |

1) Härterkomponente separiert nach 4 Tagen

2) Aus einer, dieser Bindemittelkombination entstammenden, mit 45 Millimol Ameisensäure pro 100 g Festharz neutralisierten 15%igen wäßrigen Lösung separiert die Härterkomponente B 8 nach ca. 10 Stunden.

Prüfung der Bindemittelkombinationen

Die Bindemittel wurden nach Neutralisation mit 40 bis 60 Millimol Ameisensäure und Verdünnen mit deionisiertem Wasser auf einen Festkörpergehalt von 15 % als Klarlack auf gereinigte, unvorbehandelte

Stahlbleche mit einer Trockenfilmstärke von 18 ± 2 µm kathodisch abgeschieden und 25 Minuten bei 160 °C eingebrannt.

Bei den angegebenen Prüfungen wurden für die Beispiele 1 bis 7 folgende Werte gefunden:

| | |
|---|---|
| Acetontest (1) | über 100 Sekunden |
| Schlagtiefung (2) | 60 - 80 inch x pound |
| Salzsprühtest (3) | 2 - 5 mm |
| VDA-Kennwert (4) | 2 - 6 |

Bei den Vergleichsbeispielen V1 - V3 ergeben sich folgende Werte:

| Beispiel | V1 | V2 | V3 |
|---|---|---|---|
| Acetontest | über 100 | 10 | über 100 |
| Schlagtest | 40 | 10 | 60 |
| Salzsprühtest | 4 | 8 | 5 |
| VDA-Kennwert | 3 | 7 | 6 |

Diese Werte verschlechtern sich wesentlich, sobald die Separation der Komponenten bei den Beispielen 8 und 10 erkennbar wird.

(1) Reiben mit acetongetränkter Watte, bis Filmerweichung feststellbar

(2) Prüfung mit Gerät der Fa. Erichsen, BRD (1 inch x pound = 0,113 Joule)

(3) ASTM 117-64, Testdauer 250 Stunden, Angabe der Unterrostung (beidseitig vom Schnitt) in Millimeter

(4) Korrosionswechseltest VDA 621-415; Prüfung auf zinkphosphatiertem Stahlblech; Testdauer 10 Zyklen; Kennwert gibt die Unterrostung (beidseitig vom Schnitt) in Millimeter an.

## Patentansprüche

1. Verfahren zur Herstellung von Vernetzungskomponenten für Hydroxylgruppen und/oder sekundäre und/oder primäre Aminogruppen aufweisende Lackbindemittel, insbesonders für kathodisch abscheidbare Lacke, die durch Umesterung und/oder Umamidierung und/oder Umurethanisierung vernetzbar sind, dadurch gekennzeichnet, daß man mindestens 0,25 Mol, vorzugsweise 0,5 Mol, Hydroxylgruppen einer Polyhydroxylverbindung und/oder eines Alkanolamins mit mindestens 2 Hydroxylgruppen mit einem Ester der Formel

   $R_1O - CO - R_2 - CO - OR_1$,

   wobei

   $R_1$ gleiche oder verschiedene Alkylreste mit 1 bis 8 C-Atomen und

   $R_2$ eine der Gruppen $-CH_2-$, $-CH=CH-$ $-CH(OH)-CH_2-$, $-C(OH)=CH-$, $-CH(OH)-CH(OH)-$ oder

   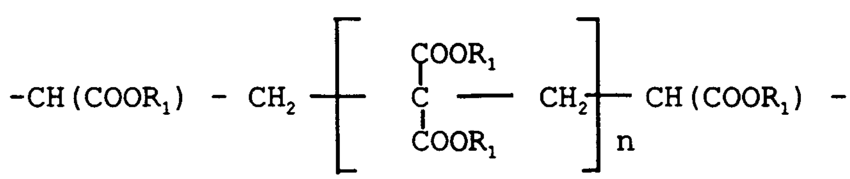

   darstellt und

   n gleich 0 bis 2 ist,

   partiell bis zur Abspaltung von jeweils 1 Mol des Veresterungsalkohols pro Mol des Esters umestert und in einer zweiten Reaktionsstufe mindestens eine weitere Hydroxylgruppe der Polyhydroxylverbindung mit einer Di- oder Polyisocyanatverbindung, deren NCO-Gruppen bis auf maximal 2, vorzugsweise bis auf eine, mit einem Verkappungsmittel blockiert sind, umsetzt.

**2.** Verfahren nach Anspruch 1, dadurch gekennzeichnet, daß man als Polyhydroxylverbindung geradkettige oder verzweigte Alkylenglykole und/oder Trimethylolalkane und/oder oligomere Polyester mit 2 bis 5 Hydroxylgruppen einsetzt.

**3.** Verfahren nach Anspruch 1, dadurch gekennzeichnet, daß man zur Blockierung der Isocyanatgruppen Verkappungsmittel mit einer Entblockungstemperatur von maximal 160 °C einsetzt.

**4.** Verfahren nach den Ansprüchen 1 bis 3, dadurch gekennzeichnet, daß man pro Mol eines Triols 0,5 bis 1 Mol der umesterungsfähigen Komponente und 2,5 bis 2 Mol der Isocyanatkomponente einsetzt.

## Claims

**1.** Process for the preparation of cross-linking components for paint binders containing hydroxyl groups and/or secondary and/or primary amino groups, particularly for cathodically depositable paints, which can be cross-linked by transesterification and/or transamidation and/or transurethanisation, characterised in that at least 0.25 mol, preferably 0.5 mol, of hydroxyl groups of a polyhydroxy compound and/or of an alkanolamine having at least 2 hydroxyl groups is partially transesterified with an ester of formula

$R_1O - CO - R_2 - CO - OR_1$,

wherein

$R_1$ represents identical or different alkyl radicals having 1 to 8 C-atoms and

$R_2$ represents one of the groups $-CH_2-$, $-CH=CH-$ $-CH(OH)-CH_2-$, $-C(OH)=CH-$, $-CH(OH)-CH(OH)-$ or

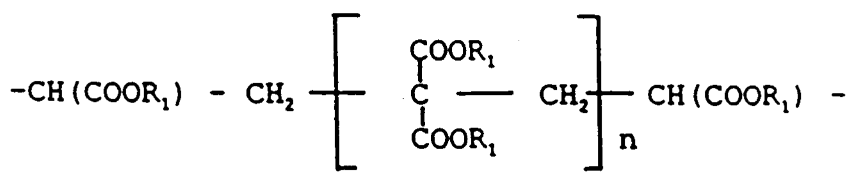

and

n is equal to 0 to 2,

until 1 mol of the esterifying alcohol has been split off for each mole of the ester and in a second reaction step at least one further hydroxyl group of the polyhydroxy compound is reacted with a di- or polyisocyanate compound, the NCO groups of which, apart from a maximum of 2, preferably apart from one, are blocked with a blocking agent.

**2.** Process according to Claim 1, characterised in that, as the polyhydroxy compound, straight-chain or branched alkylene glycols and or trimethylolalkanes and/or oligomeric polyesters having 2 to 5 hydroxyl groups are used.

**3.** Process according to Claim 1, characterised in that in order to block the isocyanate groups blocking agents with a deblocking temperature of not more than 160 °C are used.

**4.** Process according to Claims 1 to 3, characterised in that for each mole of a triol 0.5 to 1 mol of the transesterifiable component and 2.5 to 2 mol of the isocyanate component are used.

## Revendications

**1.** Procédé de préparation d'agents de réticulation pour des liants de peintures contenant des groupes hydroxyle et/ou des groupes amino secondaires et/ou primaires, en particulier pour des peintures déposables à la cathode qui sont réticulables par trans-estérification et/ou trans-amidation et/ou trans-uréthannisation, caractérisé en ce qu'on trans-estérifie partiellement au moins 0,25 mole, de préférence 0,5 mole de groupes hydroxyle d'un composé polyhydroxylé et/ou d'une alcanolamine ayant au moins

2 groupes hydroxyle avec un ester de formule

$R_1O - CO - R_2 - CO - OR_1$,

dans laquelle
les $R_1$ sont des restes alkyle identiques ou différents de 1 à 8 atomes de carbone et
$R_2$ représente l'un des groupes $-CH_2-$, $-CH=CH-$, $-CH(OH)-CH_2-$, $-C(OH)=CH-$, $-CH(OH)-CH(OH)-$, ou

$$-CH(COOR_1) - CH_2 - \left[ \begin{array}{c} COOR_1 \\ | \\ C \\ | \\ COOR_1 \end{array} - CH_2 \right]_n - CH(COOR_1) -$$

et n est égal à 0 à 2,
jusqu'à la séparation d'1 mole d'alcool de trans-estérification par mole d'ester et en ce que, dans une seconde étape réactionnelle, on fait réagir au moins un autre groupe hydroxyle du composé polyhydroxylé avec un composé di- ou polyisocyanate dont les groupes NCO, à l'exception d'au maximum 2, de préférence de l'un d'entre eux, sont bloqués par un agent de masquage .

**2.** Procédé selon la revendication 1, caractérisé en ce que l'on utilise comme composé polyhydroxylé des alkylèneglycols linéaires ou ramifiés et/ou des triméthylolalcanes et/ou des polyesters oligomères ayant 2 à 5 groupes hydroxyle.

**3.** Procédé selon la revendication 1, caractérisé en ce que l'on utilise, pour le blocage des groupes isocyanate, des agents de masquage dont la température de déblocage est d'au plus 160 ° C.

**4.** Procédé selon les revendications 1 à 3, caractérisé en ce que l'on utilise 0,5 à 1 mole de constituant trans-estérifiable et 2,5 à 2 moles de constituant isocyanate pour 1 mole d'un triol.